# EUROPEAN PATENT APPLICATION

(11) **EP 4 563 277 A1**
(43) Date of publication of application: **04.06.2025**
(21) Application number: 24215846.7
(22) Date of filing: 27.11.2024
(51) Int. Cl.: B23K 26/03, B23K 26/082, B23K 26/21, H02K 3/28, H02K 15/35, B23K 101/38, B23K 103/12

(54) **WELDING METHOD AND LASER APPARATUS**

(30) Priority: 01.12.2023 JP 2023203798
(71) Applicant: Kataoka Corporation, Kyoto-shi, Kyoto 601-8203 (JP)
(72) Inventor: YAMAMURA, Takeshi, Kyoto, 601-8203 (JP)
(74) Representative: Seemann & Partner Patentanwälte mbB

(57) **Abstract**

A welding method of welding tip ends of a first member and a second member with a laser apparatus, the tip ends having a projection shape, the welding method including: arranging the tip ends of the first member and the second member next to each other while facing a butting surface of the first member and a butting surface of the second member and while facing the tip ends towards the laser apparatus; a first step of irradiating a position on the tip end of the first member which is close to the butting surface of the first member with the laser beam to form a first fusion zone; and a second step of irradiating a position on the tip end of the second member which is close to the butting surface of the second member with the laser beam to form a second fusion zone.

## Description

### TECHNICAL FIELD

The present disclosure relates to a welding method of performing metal welding using a laser beam.

### BACKGROUND

As a technique for performing metal welding, laser welding using a laser beam is used. As compared with other welding techniques, the laser welding can weld a workpiece with energy condensed by a condensing lens, and is high in welding quality and suitable for fine welding.

In recent years, the laser welding has been used in manufacturing a stator for a motor incorporated in a hybrid vehicle or an electric automobile. The stator includes a stator core and a plurality of segment coils attached to slots of the stator core, and end portions of corresponding segment coils are bonded to each other by laser welding. Generally, rectangular wires are used for each of the segment coils, and a welding surface of the rectangular wires is as fine as several square millimeters, so that the laser welding is suitable.

In a manufacturing process of the stator, first, the rectangular wire is inserted into the slot of the stator, and at this time, in order to prevent a tip end of the rectangular wire from being caught, the tip end of the rectangular wire is cut into a tapered shape and then inserted. Then, after the rectangular wires are inserted and aligned, a "trimming step" of flattening the tip ends is performed in order to align heights of the rectangular wires with each other and stabilize the quality of welding processing which is a subsequent step (see, for example, JP2015-043676A).

### SUMMARY

However, the trimming step requires a large-scale device, which affects a tact time of a manufacturing line. Further, there is a problem in that the trimmed ends are discarded and a material utilization rate decreases.

Therefore, the present disclosure has been made in view of the above problems, and an object of the present disclosure is to provide a welding method and a laser apparatus which do not require a trimming step.

In order to solve the above problem, the present disclosure provides a welding method of butting a first member and a second member each of which has a projection shape on a tip end side thereof, and welding tip ends of the respective first member and second member by a laser beam with the tip ends facing a laser apparatus, and the welding method includes a first step of irradiating a position on the tip end of the first member which is close to a butting surface with the laser beam to form a first fusion zone; and a second step of irradiating a position on the tip end of the second member which is close to the butting surface with the laser beam to form a second fusion zone.

According to the present disclosure, since the first member and the second member each having a projection shape on the tip end side thereof can be welded, a trimming step in a manufacturing process of a stator is not required.

### BRIEF DESCRIPTION OF DRAWINGS

FIG. 1 is a flowchart showing a related-art method of manufacturing a coil for a stator.
FIG. 2 is a flowchart showing a method of manufacturing the coil for a stator in the present embodiment.
FIG. 3 is an external view showing an overall configuration of a laser apparatus 1.
FIG. 4 is a block diagram showing a functional configuration of the laser apparatus 1.
FIG. 5 is a diagram showing a configuration of a hybrid galvano scanner 10.
FIGs. 6A and 6B are diagrams illustrating a function of a focus shifter unit 6.
FIG. 7 is a diagram illustrating a function of a galvano scanner unit 8.
FIG. 8 is a block diagram showing a functional configuration of an image processing unit 9.
FIG. 9 is a block diagram showing a functional configuration of a control PC 12.
FIG. 10 is a perspective view showing a schematic configuration of a stator 50 that is a workpiece W.
FIGs. 11A and 11B are diagrams illustrating a shape of a rectangular wire 52 in the present embodiment.
FIG. 12 is a flowchart illustrating welding processing of the laser apparatus 1, and is followed by FIG. 13.
FIG. 13 is a flowchart illustrating the welding processing of the laser apparatus 1, following FIG. 12.
FIGs. 14A and 14B are diagrams each illustrating a focus position in the welding processing of the laser apparatus 1.
FIG. 15A is a diagram showing a trajectory of laser irradiation in a first step in the present embodiment. FIG. 15B is a diagram showing a trajectory of laser irradiation in a second step in the present embodiment.
FIGs. 16A and 16B are schematic diagrams each showing a change in shape of a welding surface of the workpiece W.
FIGs. 17A and 17B are diagrams each illustrating a shape of the rectangular wire 52 according to a modification.
FIG. 18 is a block diagram showing a functional configuration indicating a configuration of a laser apparatus 1a according to a modification.
FIG. 19A is a diagram showing a trajectory of the laser irradiation in the first step according to a modification. FIG. 19B is a diagram showing a trajectory of the laser irradiation in the second step according to the modification.

### DESCRIPTION OF EMBODIMENTS

A welding method according to an aspect of the present embodiment is a welding method of butting a first member and a second member each of which has a projection shape on a tip end side thereof, and welding tip ends of the respective first member and second member by a laser beam with the tip ends facing a laser apparatus, and the welding method includes a first step of irradiating a position on the tip end of the first member which is close to a butting surface with the laser beam to form a first fusion zone; and a second step of irradiating a position on the tip end of the second member which is close to the butting surface with the laser beam to form a second fusion zone.

In the welding method according to another aspect of the present embodiment, the first member and the second member are rectangular wires constituting a coil for a stator, the projection shape on the tip end side is a gable roof shape having a first inclined surface formed at a tip end portion of each of the rectangular wires and a second inclined surface formed non-parallel to the first inclined surface, and in each of the first step and the second step, one of the first inclined surface and the second inclined surface located close to the butting surface is irradiated with the laser beam.

In the welding method according to another aspect of the present embodiment, in the first step, substantially linear reciprocating irradiation is performed on the inclined surface of the first member located close to the butting surface to form the first fusion zone, and in the second step, substantially linear reciprocating irradiation is performed on the inclined surface of the second member located close to the butting surface to form the second fusion zone.

In the welding method according to another aspect of the present embodiment, the laser irradiation in the first step and the laser irradiation in the second step are alternately repeated.

In the welding method according to another aspect of the present embodiment, the laser irradiation in the first step and the laser irradiation in the second step are alternately repeated until the first fusion zone and the second fusion zone are bonded.

In the welding method according to another aspect of the present embodiment, the laser irradiation in the first step and the laser irradiation in the second step are alternately repeated until the first fusion zone and the second fusion zone are bonded to form a molten ball of a predetermined size.

In the welding method according to another aspect of the present embodiment, there is a gap between the first member and the second member, and the laser irradiation in the first step and the laser irradiation in the second step are alternately repeated until the first fusion zone and the second fusion zone enter the gap.

The welding method according to another aspect of the present embodiment further includes a jumping step of moving, after performing the laser irradiation on one of the rectangular wires, a laser irradiation position to the other of the rectangular wires in a state where the laser irradiation is stopped, while alternately repeating the laser irradiation in the first step and the laser irradiation in the second step.

In the welding method according to another aspect of the present embodiment, in the first step, the substantially linear irradiation using the laser beam is reciprocated 1.5 times on the inclined surface of the first member, and in the second step, the substantially linear irradiation using the laser beam is reciprocated 1.5 times on the inclined surface of the second member.

The welding method according to another aspect of the present embodiment further includes: an imaging step of capturing an image of the first member and the second member that are welding targets; and a control step of analyzing the image captured in the imaging step, acquiring position information of the first member and the second member, and determining an irradiation position of the laser beam based on the acquired position information.

The welding method according to another aspect of the present embodiment further includes: an imaging step of capturing an image of the first member and the second member that are welding targets; and a control step of analyzing the image captured in the imaging step, acquiring height information of the first member and the second member, and determining a midpoint of heights of the first member and the second member as a focus position based on the acquired height information.

In the welding method according to another aspect of the present embodiment, the laser beam includes a first laser beam and a second laser beam having different wavelengths.

In the welding method according to another aspect of the present embodiment, the wavelength of the first laser beam is 300 nm to 600 nm.

In the welding method according to another aspect of the present embodiment, the wavelength of the second laser beam is 780 nm to 1100 nm.

In the welding method according to another aspect of the present embodiment, output power of each of the first laser beam and the second laser beam is 500 W to 3 kW.

In the welding method according to another aspect of the present embodiment, a focused beam diameter of the second laser beam is smaller than a focused beam diameter of the first laser beam.

In the welding method according to another aspect of the present embodiment, the focused beam diameter of the second laser beam is equal to or less than one-tenth of the focused beam diameter of the first laser beam.

In the welding method according to another aspect of the present embodiment, the focused beam diameter of the second laser beam is 10 µm to 100 µm.

In the welding method according to another aspect of the present embodiment, nitrogen is sprayed to the tip end portion at a flow rate of 5 L/min to 100 L/min and an inclination angle of 0° to 90° with respect to the tip end portion from the same time as or before the irradiation using the laser beam to an end of the irradiation or later.

A laser apparatus according to an aspect of the present embodiment is a laser apparatus for butting a first member and a second member each of which has a projection shape on a tip end side thereof, and welding tip ends of the respective first member and second member, the laser apparatus includes an oscillator configured to oscillate a laser beam; a galvano scanner unit configured to perform irradiation using the laser beam while displacing the laser beam to any direction; and a control unit configured to control the oscillator and the galvano scanner unit, and the control unit controls the oscillator and the galvano scanner unit such that a position on the tip end of the first member which is close to a butting surface is irradiated with the laser beam to form a first fusion zone, and a position on the tip end of the second member which is close to the butting surface is irradiated with the laser beam to form a second fusion zone.

The laser apparatus according to another aspect of the present embodiment further includes: an image processing unit configured to capture an image of the first member and the second member to detect position information, and the control unit determines an irradiation position of the laser beam using the position information detected by the image processing unit.

### <Embodiments>

Here, a laser apparatus 1 according to an embodiment of the present disclosure will be described in detail with reference to the drawings. The laser apparatus 1 is a welding apparatus which welds a workpiece W made of a material having high thermal conductivity by irradiating the workpiece W with a laser beam and thermally converting energy of the laser beam. The workpiece W is, for example, a coil for a stator incorporated into an electric automobile or the like.

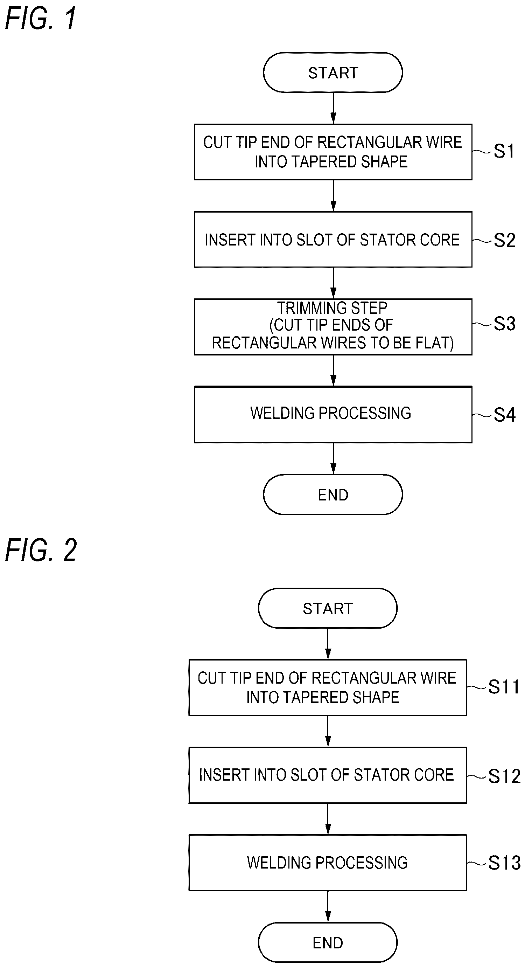

FIG. 1 is a flowchart showing a related-art method of manufacturing a coil for a stator. In the related-art manufacturing method, before the rectangular wires are inserted into slots of the stator, a tip end of each of the rectangular wires is cut into a tapered shape in order to prevent the tip end of the rectangular wire from being caught (step S1). Then, the respective rectangular wires are inserted into the corresponding slots (step S2) and aligned, and thereafter a trimming step of flattening the tip ends (step S3) is performed in order to align heights of the rectangular wires with each other and stabilize the quality of welding processing which is a subsequent step. Thereafter, the tip ends of the corresponding rectangular wires are laser-welded to each other (step S4).

FIG. 2 is a flowchart showing a method of manufacturing the coil for a stator when the laser apparatus according to the present embodiment is used. In the present embodiment, as in the related-art example, the tip end of each of the rectangular wires is cut into a tapered shape in order to prevent the tip end of the rectangular wire from being caught at the time of insertion into the slot (step S11). Then, the respective rectangular wires are inserted into the corresponding slots and aligned (step S12). Subsequently, in the present embodiment, the tip ends of the corresponding rectangular wires are laser-welded to each other while the tip ends of the rectangular wires remain in the tapered shape (step S13).

In this way, in the present embodiment, a trimming step of cutting the rectangular wire to be flat is not performed, and the rectangular wire with the tapered tip end is irradiated with laser. A laser apparatus and welding method capable of preventing generation of spatters and implementing welding processing with high quality even in such a case will be described in detail below.

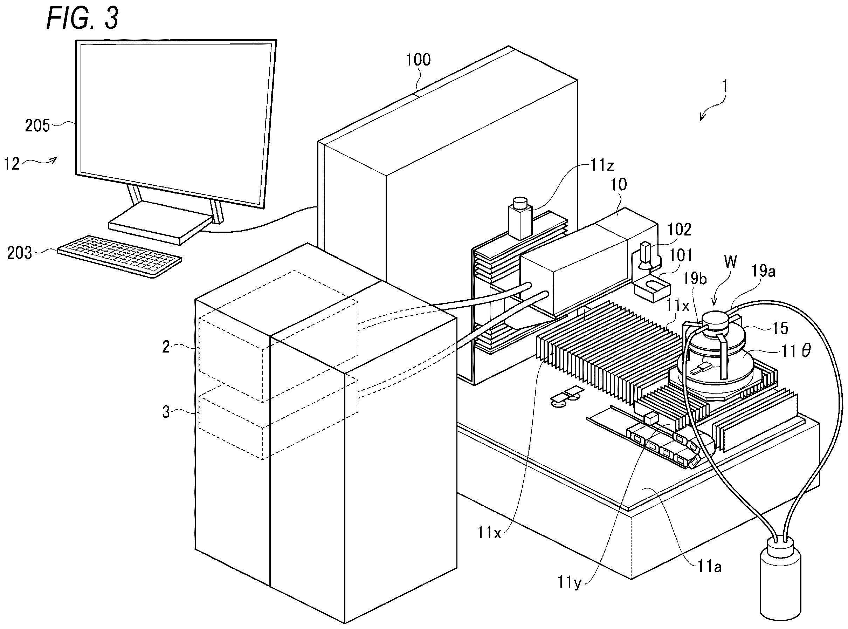

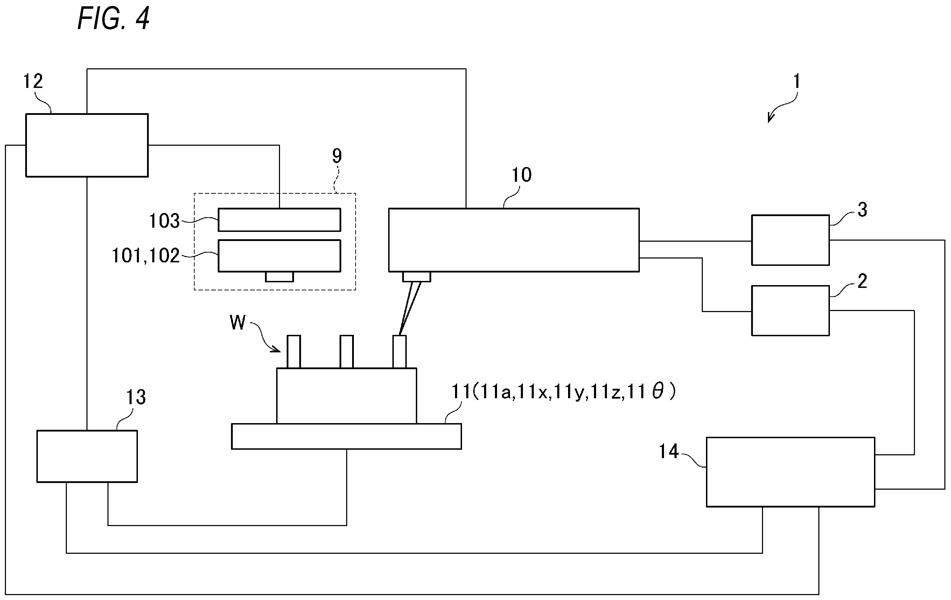

FIG. 3 is an external view showing a configuration of the laser apparatus 1 according to the present embodiment, and FIG. 4 is a schematic diagram showing a functional configuration of the laser apparatus 1.

As shown in FIGS. 3 and 4, the laser apparatus 1 includes a first oscillator 2 (blue semiconductor laser) that oscillates a first laser beam L1, a second oscillator 3 (IR fiber laser) that oscillates a second laser beam L2, a hybrid galvano scanner 10 that aligns optical axes of the first laser beam L1 and the second laser beam L2 with each other and displaces irradiation positions of the first laser beam L1 and the second laser beam L2 with respect to the workpiece W, an image processing unit 9 that captures an image of the workpiece W and analyzes a position information of each of rectangular wires, a workpiece setting stage 11 on which the workpiece W is placed and which can move the placed workpiece W in a three-dimensional direction (x, y, z) and a rotation direction (θ) around a z-axis, a fixing jig 15 that fixes the workpiece W to the workpiece setting stage 11, a control personal computer (PC) 12 that controls an entire of the laser apparatus 1, a programmable logic (PLC) 13 that controls each device in cooperation with the control PC 12, a laser controller 14 that controls operations of the first oscillator 2 and the second oscillator 3, and shielding gas nozzles 19a and 19b for supplying a shielding gas such as nitrogen to the workpiece W (illustration of the shielding gas nozzles 19a and 19b is omitted in FIG. 4).

The image processing unit 9 includes an illumination device 101, an imaging device 102, and a controller 103, and the controller 103 is built in a control panel 100 of FIG. 3. The control panel 100 includes a built-in computer for controlling the laser apparatus 1, and specifically, in addition to the controller 103 of the image processing unit 9, the PLC 13 and the laser controller 14 are built-in. The workpiece setting stage 11 includes a base 11a, an x-axis stage 11x that is a mechanism for moving the workpiece W in an x-axis direction, a y-axis stage 11y that is a mechanism for moving the workpiece W in a y-axis direction, a θ-axis stage 11θ that is a mechanism for rotating the workpiece W around the z-axis, and a z-axis stage 11z that is a mechanism for relatively moving the workpiece W and the hybrid galvano scanner 10 in a z-axis direction.

### (1) Regarding Laser Beam

The first laser beam L1 and the second laser beam L2 oscillated from the first oscillator 2 and the second oscillator 3 are respectively transmitted through optical fibers and incident on the hybrid galvano scanner 10. Then, the first laser beam L1 and the second laser beam L2 are superimposed by the hybrid galvano scanner 10 such that the optical axes thereof are aligned with each other. The superimposed first and second laser beams L1 and L2 are reduced to a predetermined diameter, and then emitted to the facing workpiece W. As described above, the laser apparatus 1 performs welding by irradiating the workpiece W with the two laser beams L1 and L2.

A blue semiconductor laser coupled to a multi-mode fiber is used as the first laser beam L1. A wavelength of the first laser beam L1 may be 300 nm to 600 nm, and a green laser may be used instead of the blue laser. Further, output power of the first laser beam L1 is preferably 500 W to 3 kW, and is set to 800 W as an example in the present embodiment.

As the second laser beam L2, a near-infrared single-mode fiber laser having a wavelength of 780 nm to 1100 nm is used. That is, the first laser beam L1 and the second laser beam L2 have different wavelengths, and the wavelength of the first laser beam L1 is shorter than the wavelength of the second laser beam L2. Output power of the second laser beam L2 is preferably 500 W to 3 kW, and is set to 2 kW as an example in the present embodiment.

In the present embodiment, the first laser beam L1 of multi-mode is used, and the second laser beam L2 of single-mode is used. The second laser beam L2 is a spot beam having a focused beam diameter smaller than that of the first laser beam L1. Therefore, by using a single-mode fiber laser as the second oscillator 3, the second laser beam L2 having a small beam diameter and a high peak energy intensity can be generated effectively.

### (2) Regarding Hybrid Galvano Scanner 10

Next, the hybrid galvano scanner 10 will be described in detail.

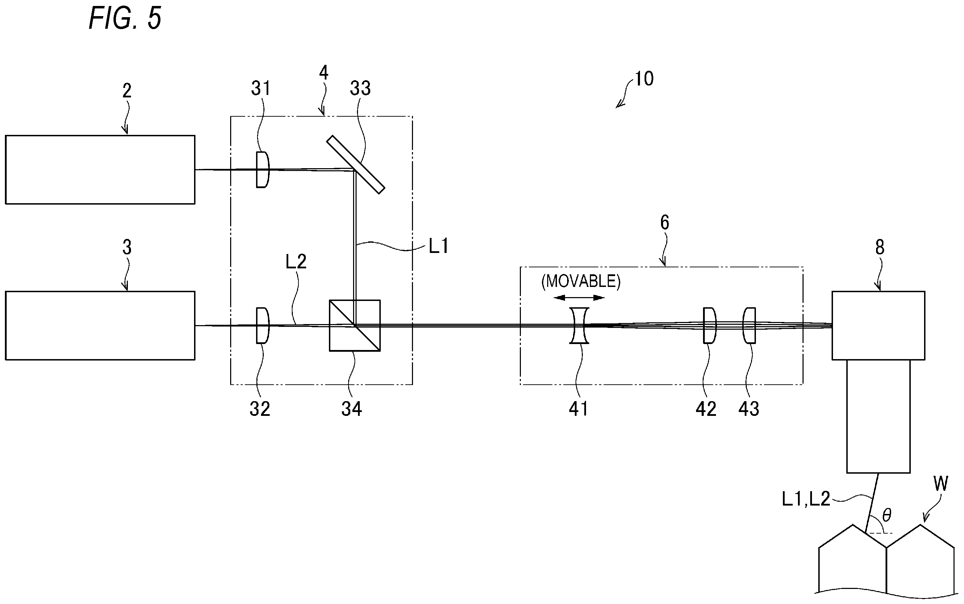

The hybrid galvano scanner shown in FIGS. 5 to 7 includes a combiner unit 4 that superimposes the laser beams L1 and L2 respectively supplied from the first oscillator 2 and the second oscillator 3 on the same optical axis, a focus shifter unit 6 that is located downstream of the combiner unit 4 and adjusts a focal length of the laser beams L1 and L2 that are superimposed on the same optical axis, and a galvano scanner unit 8 that is located downstream of the focus shifter unit 6 and changes directions of the optical axes of the laser beams L1 and L2 traveling toward the workpiece W.

As shown in FIG. 5, the combiner unit 4 includes, for example, lenses (collimation lenses or the like) 31 and 32 for collimating the laser beams L1 and L2 supplied from the first oscillator 2 and the second oscillator 3, respectively, and mirrors (including a beam splitter, a half mirror, a combiner, or the like) 33 and 34 necessary for aligning the optical axes of the laser beams L1 and L2 respectively passing through the lenses 31 and 32. Of course, the combiner unit 4 may include optical elements, optical fibers, and the like other than those described above. Further, three or more types of laser beams having different wavelengths may be superimposed in the combiner unit 4.

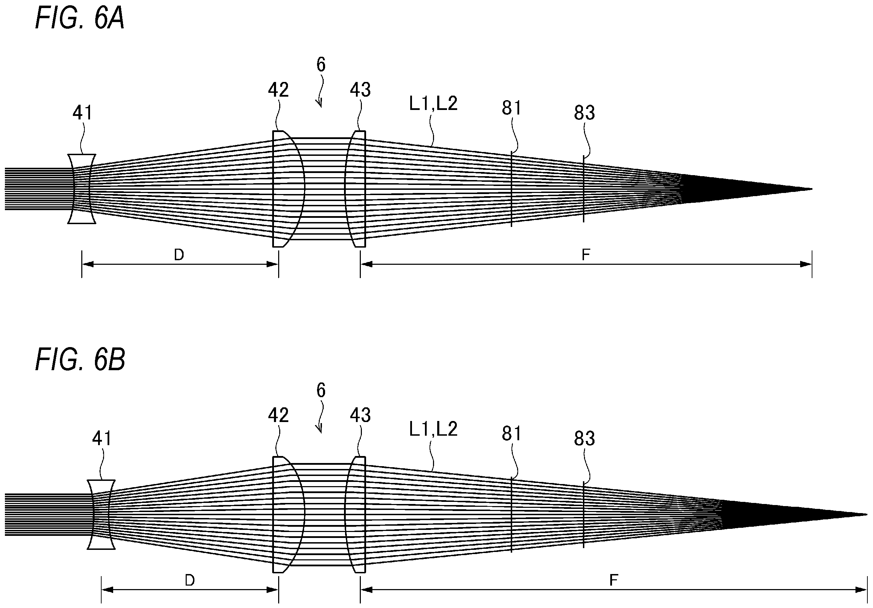

As shown in FIGs. 6A and 6B, the focus shifter unit 6 includes a lens (a concave lens, particularly, a biconcave lens, or the like) 41 that expands a diameter of the laser beams L1 and L2 superimposed in the combiner unit 4, and lenses (a plurality of convex lenses, particularly, plano-convex lenses that serve as a collimation lens and a condensing lens) 42 and 43 that reduce the diameter of the laser beams L1 and L2 passing through the lens 41. Of course, the focus shifter unit 6 may include optical elements, optical fibers, and the like other than those described above.

The focus shifter unit 6 variably adjusts a focal length F of the laser beams L1 and L2 from the combiner unit 4. Therefore, in an example shown in FIGs. 6A and 6B, at least one of the concave lens 41 and/or the convex lens 42 is supported by a linear motor truck or another suitable drive mechanism and can move forward and backward along an optical axis direction in order to make a relative distance D between the concave lens 41 and the convex lens 42 along the optical axes of the laser beams L1 and L2 variably adjustable. The condensing lens 43 at a terminal end does not have to move forward or backward along the optical axis direction.

As shown in FIG. 6A, as the relative distance D between the concave lens 41 and the convex lens 42 decreases, the focal length F of the laser beams L1 and L2 passing through the lenses 41, 42, and 43 of the focus shifter unit 6 increases. That is, a focal point of the laser beams L1 and L2 moves away from the lens 43 at the terminal end of the focus shifter unit 6.

Conversely, as shown in FIG. 6B, as the relative distance D between the concave lens 41 and the convex lens 42 increases, the focal length F of the laser beams L1 and L2 passing through the lenses 41, 42, and 43 of the focus shifter unit 6 decreases. That is, the focal point of the laser beams L1 and L2 approach the lens 43 at the terminal end of the focus shifter unit 6.

In the lenses 41, 42, and 43, a chromatic aberration inevitably occurs based on universal physical laws (because a refractive index of light depends on a wavelength of the light). Therefore, when the workpiece W is irradiated with a plurality of superimposed laser beams having different wavelengths, an irradiation position of a laser beam having a certain wavelength and an irradiation position of a laser beam having another wavelength that is superimposed on the laser beam having the certain wavelength are displaced on the workpiece W. Due to the displacement, there is a concern that a desired laser processing or processing result cannot be obtained. Therefore, in practice, the focal points of the superimposed laser beams L1 and L2 are aligned by adjusting positions of the lens 31 and/or the lens 32 through which the laser beams L 1 and L2 respectively output from the first oscillator 2 and the second oscillator 3 pass.

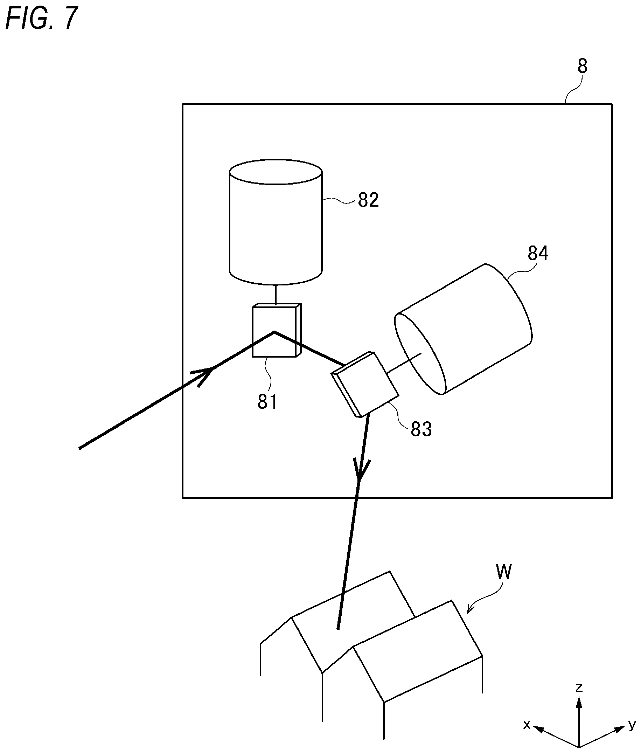

As shown in FIGs. 5 and 7, the galvano scanner unit 8 is a known unit that rotates mirrors 81 and 83, that reflect the laser beams L1 and L2 from the focus shifter unit 6, via drive mechanisms 82 and 84 such as servo motors, stepping motors, and the like. In short, the galvano scanner unit 8 can change a direction of the optical axis of the laser beams L1 and L2 reflected by the mirrors 81 and 83. The galvano scanner unit 8 according to the present embodiment includes both x-axis galvano scanners 83 and 84 that change the optical axis of the laser beams L1 and L2 traveling toward the workpiece W along an X-axis direction of the workpiece W, and y-axis galvano scanners 81 and 82 that change the optical axis of the laser beams L1 and L2 along a y-axis direction of the workpiece W. The galvano scanner unit 8 can two-dimensionally control an irradiation position of the laser beams L1 and L2 on the workpiece W by scanning the workpiece W with the laser beams L1 and L2 two-dimensionally in xy directions.

The hybrid galvano scanner 10 of the present embodiment is characterized in that the adjustment in the focal length F performed by the focus shifter unit 6 is synchronized with the change in the direction of the optical axis performed by the galvano scanner unit 8.

The closer an angle θ between the workpiece W and the optical axis of the laser beams L1 and L2 passing through the mirrors 81 and 83 of the galvano scanner unit 8 is to vertical, the shorter an optical path length from the mirror 83 to the workpiece W is. Thus, the focus shifter unit 6 and the galvano scanner unit 8 are synchronously controlled such that the closer the angle θ between the workpiece W and the optical axes of the laser beams L1 and L2 is to vertical (90°), the shorter the focal length F realized by the focus shifter unit 6 is.

On the contrary, the more the angle θ between the workpiece W and the optical axis of the laser beams L1 and L2 passing through the mirrors 81 and 83 of the galvano scanner unit 8 is inclined from vertical, the longer the optical path length from the mirror 83 to the workpiece W is. Thus, the focus shifter unit 6 and the galvano scanner unit 8 are synchronously controlled such that the more the angle θ between the workpiece W and the optical axis of the laser beams L1 and L2 is inclined (away from 90°), the longer the focal length F realized by the focus shifter unit 6 is.

The laser beams L1 and L2 can be emitted to any portion on the workpiece W through the synchronous control on the lenses 41 and 42 of the focus shifter unit 6 and the mirrors 81 and 83 of the galvano scanner unit 8, and moreover, the laser beams L1 and L2 can be accurately focused on a desired processing target surface of the workpiece W.

It is desirable that a lens (fθ lens or the like) that allows the laser beams L1 and L2 to pass therethrough does not exist between the mirrors 81 and 83 of the galvano scanner unit 8 and the workpiece W. Accordingly, the chromatic aberration that occurs when the laser beams L1 and L2, whose optical axis direction is manipulated by the galvano scanner unit 8, pass through the lenses can be reliably avoided. That is, a displacement does not occur between a position on the workpiece W at which the laser beam L1 having a certain wavelength hits and a position on the workpiece W at which the laser beam L2 superimposed on the first laser beam L1 hits. Accordingly, a desired laser processing or processing result can be obtained.

However, a lens that transmits the laser beams L1 and L2 may be interposed between the mirrors 81 and 83 of the galvano scanner unit 8 and the workpiece W as long as the chromatic aberration occurs only to an extent that the displacement in the irradiation positions of the laser beams L1 and L2 can be ignored.

The hybrid galvano scanner used in the present embodiment is not limited to the configuration described above. The biconcave lens 41, the collimation lens 42, and the condensing lens 43 that are elements of the focus shifter unit 6 are generally located downstream of the mirrors 33 and 34 that are elements of the combiner unit 4, but an arrangement of the optical elements 33, 34, 41, 42 and 43 is not limited to that shown in FIG. 5.

### (3) Regarding Image Processing Unit 9

In the welding of the coil for the stator, in order to appropriately irradiate the rectangular wire of several millimeters with the laser, it is preferable to accurately measure a position of the rectangular wire. Therefore, in the laser apparatus 1, the image processing unit 9 performs image analysis to measure a center position and a height for each of the tip ends of the plurality of rectangular wires 52.

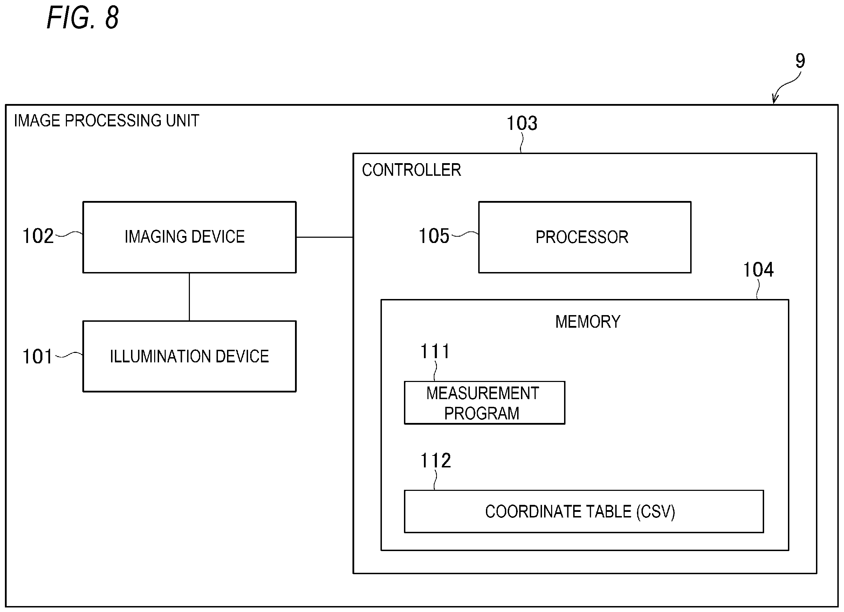

As shown in FIG. 8, the image processing unit 9 includes the illumination device 101 that irradiates the workpiece W with illumination light, the imaging device 102 that captures an image of the workpiece W illuminated by the illumination device 101, and the controller 103 that measures the center position and the height of each of the rectangular wires 52 in the workpiece W using image data captured by the imaging device 102.

The illumination device 101 and the imaging device 102 are respectively an illumination device and a three-dimensional camera suitable for a pattern projection method, the illumination device 101 projects a plurality of stripe patterns (striped patterns) to the workpiece W from a plurality of different directions, and the imaging device 102 receives reflected light by an image sensor such as a CMOS. The controller 103 generates a three-dimensional image by analyzing a change in the patterns of the projected light and the reflected light.

As shown in FIG. 8, the controller 103 includes a memory 104 and a processor 105. A measurement program 111 is stored in advance in the memory 104. By executing the measurement program 111, the processor 105 measures the center positions and heights of all the rectangular wires 52 in the workpiece W, and generates a coordinate table 112 (CSV data) describing a measure result for each pair of welding targets. The processor 105 stores the generated coordinate table 112 in the memory 104.

### (4) Regarding Control PC 12

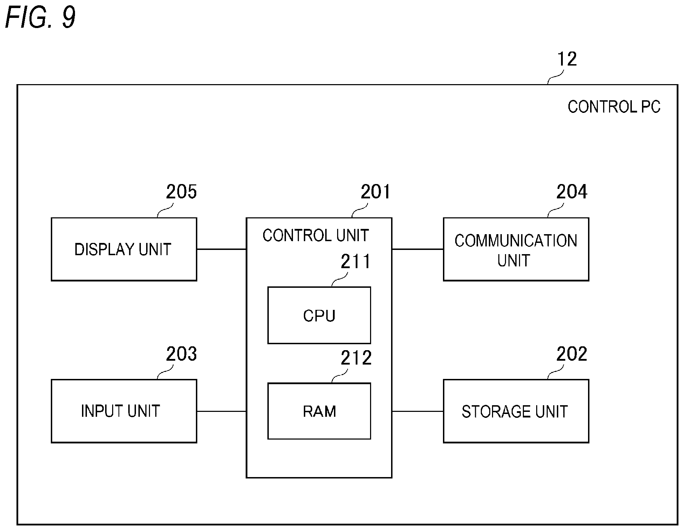

As shown in FIG. 9, the control PC 12 includes a control unit 201, a storage unit 202, an input unit 203, a communication unit 204, and a display unit 205.

Specifically, the control PC 12 is a computer system including hardware resources such as a central processing unit (CPU), a read only memory (ROM), a random access memory (RAM), a hard disk drive (HDD), a solid state drive (SSD), a display unit, a communication interface, and input devices such as a keyboard and a mouse. In the welding processing using the galvano scanner, the control PC may be referred to as a "galvano PC".

The control unit 201 includes a CPU 211 and a RAM 212 as a working memory.

The storage unit 202 is a so-called auxiliary storage device, and is implemented by a non-volatile memory such as an HDD, an SSD, a read only memory (ROM), or a flash memory.

The storage unit 202 stores a computer program for controlling the laser apparatus 1, various laser parameters received via the input unit 203, or various types of data such as processing figure data used in the welding processing.

The CPU 211 of the control unit 201 controls the first oscillator 2, the second oscillator 3, the hybrid galvano scanner 10, the PLC 13, the laser controller 14, and the like to perform the welding processing on the workpiece W, by loading the computer program stored in the storage unit 202 into the RAM 212 serving as the working memory and executing the computer program. The laser parameters stored in the storage unit 202 include a laser output, a processing rate (laser irradiation time), a mark speed, a slow-up time, a slow-down time, and the like that are to be used in the first oscillator 2 and the second oscillator 3.

The input unit 203 includes an input device such as a keyboard, a mouse, and various switches for receiving a user operation, and a device for inputting data by connecting a removable recording medium such as a USB memory or an SD memory card. Data received via the input unit 203 is stored in the storage unit 202.

The communication unit 204 performs information communication with external devices (the image processing unit 9, the hybrid galvano scanner 10, the PLC 13, the laser controller 14, and the like) connected therewith wirelessly or by wire.

The display unit 205 includes a display unit, a video codec, a graphics processing unit (GPU), a memory for screen data, and the like, generates a UI screen and the like and displays the UI screen on the display unit. A user may input various parameters to be instructed to the laser controller 14 via the input unit 203, in a state where the UI screen is displayed on the display unit 205.

### (5) Description of Workpiece W

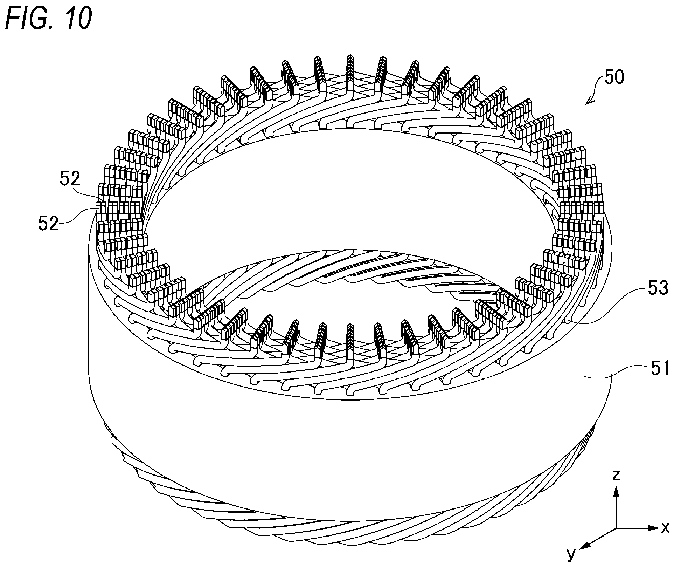

Next, the workpiece W that is a welding target will be described with reference to FIGs. 10 11A and 11B. FIG. 10 is a perspective view showing a schematic configuration of a stator 50 that is a stator of a motor of an electric automobile or the like. As shown in the figure, the stator 50 includes a substantially cylindrical stator core 51 and a plurality of rectangular wires (segment coils) 52 respectively inserted into a plurality of slots provided in the stator core 51. Each of the rectangular wires 52 is a conductor (electric wire) having a rectangular cross section. The rectangular wire 52 is usually made of pure copper, but may be made of a metal material having high conductivity, such as an alloy containing copper as a main component or an alloy containing copper and aluminum.

An end portion of each of the rectangular wires 52 protrudes from an upper end portion of the stator core 51, and the laser apparatus 1 laser-welds the tip end portions of two rectangular wires 52 adjacent to each other in a radial direction of the stator core 51.

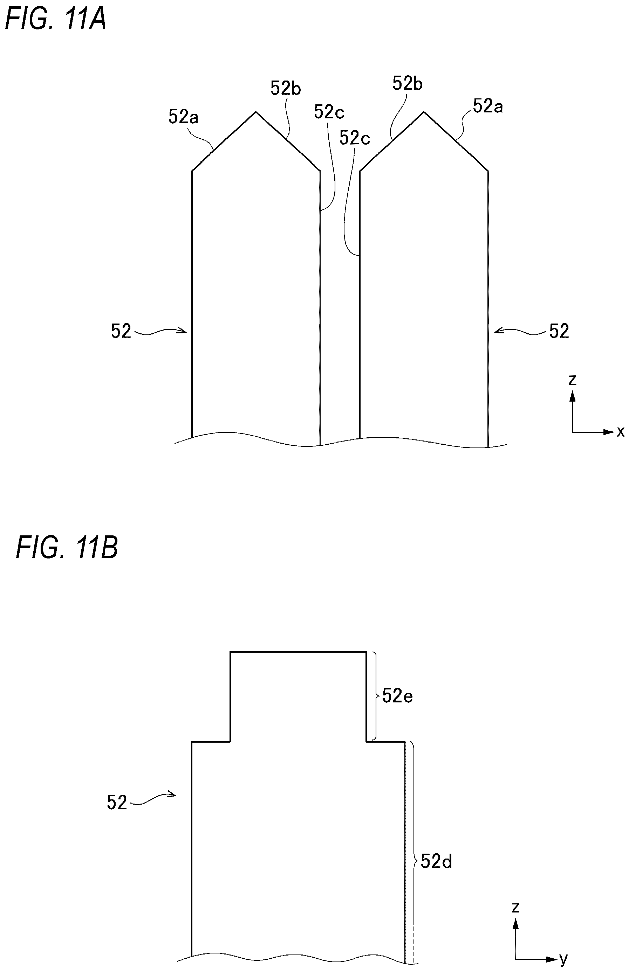

Each of the rectangular wires 52 is cut in advance such that a tip end thereof has a tapered shape in order to prevent the rectangular wire 52 from being caught at the time of insertion into the slot 53. An example of the shape of the rectangular wire 52 is shown in FIGs. 11A and 11B. As shown in FIG. 11B, the rectangular wire 52 includes a base portion 52d and a neck portion 52e having a narrower width in the y-axis direction than the base portion 52d, and as shown in FIG. 11A, the neck portion 52e has a gable roof shape having two inclined surfaces 52a and 52b. In processing of welding the tip ends of the rectangular wires 52, an insulating coating portion on a tip end side is peeled off, the tip end portions of the corresponding two rectangular wires are butted with each other, and the butted tip end portions face the laser apparatus 1 and irradiated with a laser beam. As described above, in the present embodiment, since the rectangular wire 52 has the gable roof shape on the tip end side thereof, a large amount of spatters may be generated when welding is performed without considering the shape. Therefore, the laser apparatus 1 performs laser irradiation by focusing the laser beam on the inclined surfaces 52b of the corresponding two rectangular wires 52 close to a butting surface 52c.

A gap or a step may be generated when the tip end portions of the two rectangular wires 52 are butted with each other, due to a variation in processing accuracy of the respective rectangular wires 52, mechanism accuracy of the fixing jig 15, an insertion state into the slot 53, or the like.

### (6) Operations in Welding Processing of Laser Apparatus 1

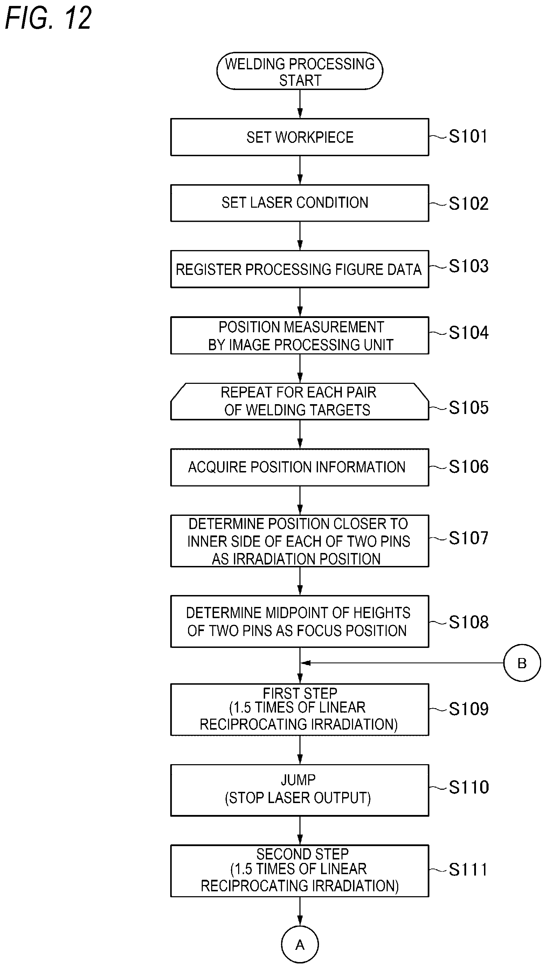

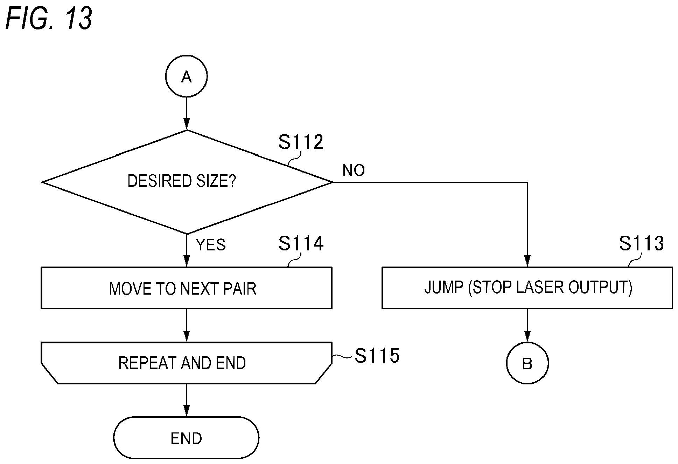

Next, operations of the laser apparatus 1 will be described with reference to FIGs. 12 and 13.

First, the workpiece W is set on the workpiece setting stage 11 (step S101). The control PC 12 sets laser parameters (the laser output, the slow-up time, the slow-down time, and the like) for the first oscillator 2 and the second oscillators 3 via the laser controller 14 (step S102). The user operates the input unit 203 of the control PC 12 to input the processing figure data used in the hybrid galvano scanner 10 during the laser irradiation in a first step and a second step, and the control PC 12 registers the processing figure data in the storage unit 202 (step S103). In the present embodiment, the processing figure data representing a trajectory of a "straight line" is registered. The processing in steps S101, S102, and S103 is not necessarily performed in this order.

Subsequently, the workpiece setting stage 11 on which the workpiece W is placed is moved to dispose the workpiece W immediately below the image processing unit 9. Next, the image processing unit 9 measures a position of each rectangular wire 52 (step S104). Specifically, the illumination device 101 projects a plurality of stripe patterns (striped patterns) to the workpiece W from a plurality of different directions by the pattern projection method, the imaging device 102 captures images, and the controller 103 combines the captured images to calculate a 3D shape. The controller 103 of the image processing unit 9 measures the center position and the height of each rectangular wire 52 from the 3D shape, and generates the CSV data (coordinate table 112) describing the measurement result. The image processing unit 9 transmits the CSV data (coordinate table 112) in which the measurement result is written to the control PC 12. At this time, the CSV data may be transmitted from the image processing unit 9 to the control PC 12 via a wireless or wired network or via a portable recording medium such as a USB memory or an SD memory card.

Subsequently, the laser apparatus 1 performs laser processing. In the present embodiment, a case in which a scanning movable range of the hybrid galvano scanner 10 covers an entire size of the workpiece W is assumed. However, when performing welding processing of a motor larger than the scanning operation range of the galvano scanner, the laser apparatus 1 may perform welding processing while rotating the workpiece W by the θ-axis stage 11θ of the workpiece setting stage 11. Depending on a size of the motor, the welding processing may be performed while rotating the motor one-fourth of a turn every time, or the welding processing may be performed while rotating the motor one-eighth of a turn every time.

The laser apparatus 1 repeats the processing from step S105 to step S115 for each pair of the rectangular wires 52 that are welding targets.

The control unit 201 of the control PC 12 refers to the coordinate table 112 and acquires position information of the pair currently being processed (step S106). The position information acquired here includes at least center coordinates and height information of each of the two rectangular wires.

The control unit 201 determines a laser irradiation position in each of the first step and the second step, which will be described later, to be a position closer to an inner side of each rectangular wire 52 (step S107). That is, referring to FIG. 11A, the position closer to the inner side is a position on the inclined surface 52b close to the butting surface 52c of each rectangular wire 52.

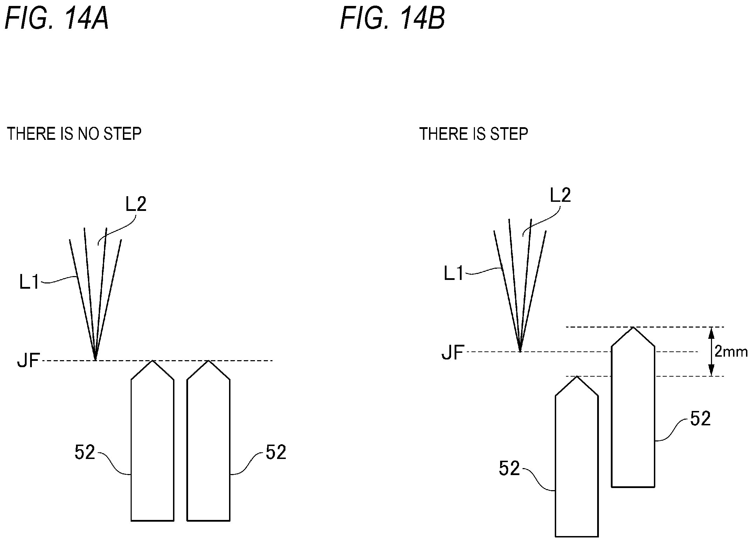

Further, the control unit 201 determines a midpoint of the heights of the two rectangular wires 52 as a focus position (step S108). If there is no step between the two rectangular wires 52, the first laser beam L1 and the second laser beam L2 are focused on a position of just focus (JF) shown in FIG. 14A. If there is a step between the two rectangular wires 52, the first laser beam L1 and the second laser beam L2 are focused on a position of JF shown in FIG. 14B. The laser apparatus 1 of the present embodiment can perform processing with sufficiently high welding quality even when the step is about 2 mm.

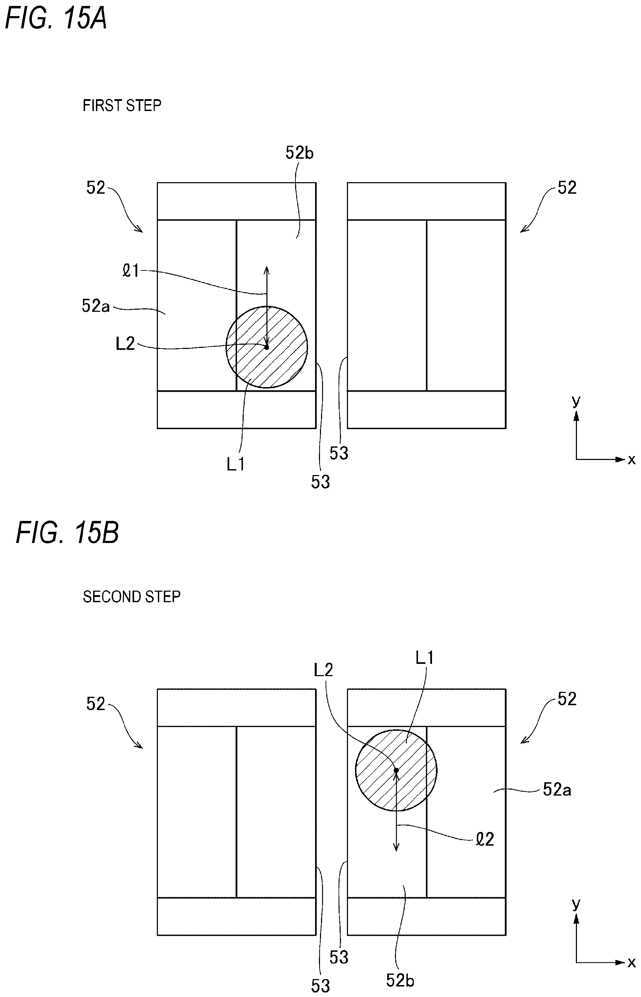

Next, the laser apparatus 1 performs the laser irradiation in the first step (step S109). FIG. 15A shows a trajectory l1 of the irradiation using the first laser beam L1 and the second laser beam L2 in the first step. In the first step, substantially linear reciprocating irradiation using the first laser beam L1 and the second laser beam L2 is performed 1.5 times on the inclined surface 52b of one of the rectangular wires 52 in the y-axis direction at a speed of 500 mm/s. Here, as shown in FIG. 15A, a focused beam diameter of the first laser beam L1 is larger than a focused beam diameter of the second laser beam L2, and as an example, in the present embodiment, the focused beam diameter of the first laser beam is 1050 µm and the focused beam diameter of the second laser beam L2 is 40 µm. A size of the rectangular wire 52 used in the present embodiment is about 2.0 mm × 3.0 mm.

When the irradiation in the first step is completed, the laser apparatus 1 stops the laser output and jumps to the other rectangular wire 52 (moves the laser irradiation position) (step 5110). In a case of butt welding of the rectangular wires, a slight gap due to a thickness of the insulating coating portion is generated between the rectangular wires. A size of the gap is generally about 0.4 mm to 1.0 mm. Since a lower part of the rectangular wire is damaged when the laser escapes from the gap, the laser output is stopped when the laser irradiation position is moved from one rectangular wire to the other rectangular wire. Accordingly, the laser is prevented from escaping from the gap.

Subsequently, the laser apparatus 1 performs the laser irradiation in the second step (step S111). FIG. 15B shows a trajectory l2 of the irradiation using the first laser beam L1 and the second laser beam L2 in the second step. In the second step, substantially linear reciprocating irradiation using the first laser beam L1 and the second laser beam L2 is performed 1.5 times on the inclined surface 52b of the other of the rectangular wires 52 in the y-axis direction at a speed of 500 mm/s.

When a molten ball of a desired size is not formed at the tip end portions of the two rectangular wires even after the irradiation in the second step is completed (N in step S112), the laser output is stopped, and the processing jumps to the other rectangular wire 52 (step S113). Then, the irradiation in the first step is repeated. When the irradiation in the second step is completed and a molten ball of a desired size is formed at the tip end portions of the two rectangular wires (Y in step S112), the laser irradiation position is moved to the next pair of rectangular wires (step S114), and the processing returns to step S106.

The laser apparatus 1 sprays nitrogen which is a shielding gas at a flow rate of 5 L/min to 100 L/min on the welding surface of the rectangular wires 52 from the same time as or before the irradiation using the first laser beam L1 and the second laser beam L2 to an end of the irradiation or later. More preferably, the nitrogen is sprayed at a flow rate of 10 L/min to 40 L/min. The laser apparatus 1 welds the rectangular wires 52 in a nitrogen atmosphere, thus oxidation of the welding surface can be prevented, and accordingly, a decrease in welding strength and generation of porosity caused by the oxidation of the welding surface can be prevented.

In the present embodiment, nitrogen is sprayed from the left and right using two shield nozzles 19a and 19b, and an angle of each of the shield nozzles 19a and 19b with respect to the workpiece W is 30 degrees as an example. A diameter (nozzle tip diameter) of a tip end opening of each of the shield nozzles 19a and 19b is preferably about 1 mm to 10 mm. Further, a working distance which is a distance from the tip end opening of each of the shield nozzles 19a and 19b to the workpiece W is preferably about 5 mm to 15 mm. In this way, by suitably selecting conditions such as a flow rate of the shielding gas, the nozzle tip diameter, and the working distance, a clean molten ball can be formed while preventing swing of the molten ball.

As described above, the laser apparatus 1 repeats the irradiation in the first step and the irradiation in the second step, thus a corner of an end surface of each of the rectangular wires is gradually melted and rounded, and a first fusion zone and a second fusion zone are formed on the tip end side of each of the rectangular wires 52. When the fusion zones enter the gap and are bonded, a single fusion zone extending across the two rectangular wires 52 is formed. Thereafter, the irradiation in the first step and the irradiation in the second step are repeated until a molten ball having a desired size is formed.

It is difficult to measure the size of the molten ball during the welding, and a time until the molten ball having a desired size is formed at the tip end portions of the rectangular wires 52 varies depending on the size of the rectangular wire 52, the laser conditions, and the like, so that it is preferable to perform test processing in advance. The test processing is performed on the rectangular wires 52 to be tested, and a laser irradiation time until a molten ball of a desired size is formed is measured. Then, if the laser irradiation time obtained as a result of the test processing is input to the control PC 12 and is set as a laser parameter in each of the first oscillator 2 and second oscillator 3 via the laser controller 14, it is possible to determine whether a molten ball of a desired size is formed by determining whether the laser irradiation time reaches the set time in step S112.

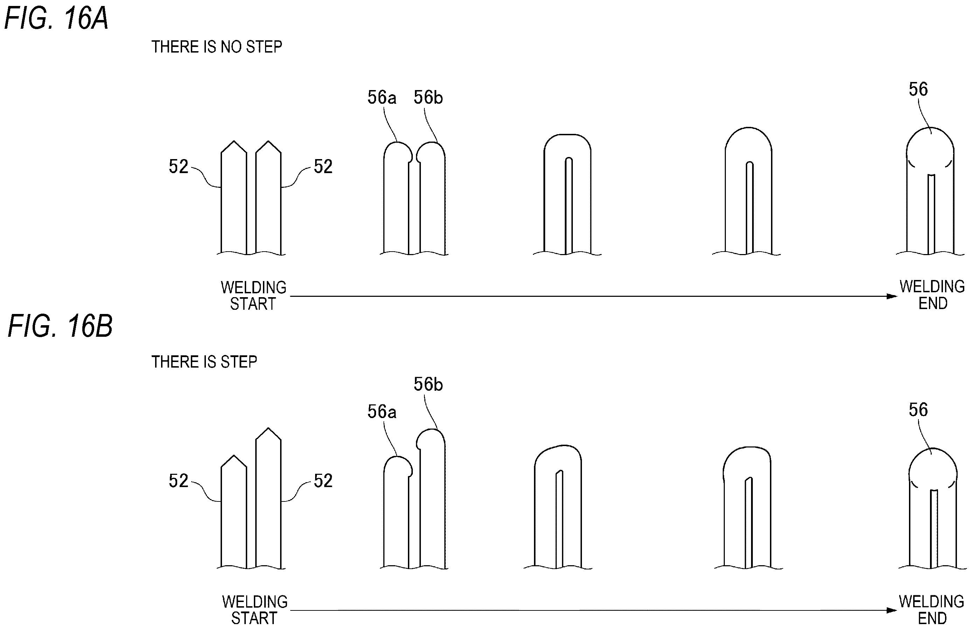

FIGs. 16A and 16B are schematic diagrams showing a change in the shapes of the tip end portions of the rectangular wires 52 from a start of the welding to an end of the welding after the molten ball 56 of a desired size is formed. FIG. 16A shows a change in the shape in a case where there is no step in the pair of rectangular wires 52, and FIG. 16B shows a change in the shape in a case where there is a step in the pair of rectangular wires 52. In either case, a first fusion zone 56a and a second fusion zone 56b formed on the respective rectangular wires 52 are bonded to form a single molten ball extending across the two rectangular wires 52. In the case where there is a step, a melting height equivalent to that in the case where there is no step can be implemented by performing laser irradiation slightly longer until the step is absorbed than in the case where there is no step.

The laser apparatus 1 performs laser irradiation on the rectangular wires 52, each having a tapered tip end, at a predetermined position close to the butting surface, and thus generation of spatters can be prevented and high-quality laser welding can be implemented. Accordingly, a "trimming step" performed in the related art can be omitted. Further, a time until the molten balls formed on the respective rectangular wires 52 are bonded can be shortened, and the tact time for manufacturing the entire stator can be shortened.

Further, the laser apparatus 1 performs scanning-irradiation at a high speed using the first laser beam L1 having a wavelength of 300 nm to 600 nm and a high optical absorptance with respect to copper, so as to form a molten pool in the workpiece W. Then, by irradiating an inside of the molten pool to be formed with the second laser beam L2 having a small focused beam diameter and a high energy density, a locally deep penetration depth is realized in the molten pool, and formation of the molten pool is promoted.

Further, the laser apparatus 1 can effectively apply heat to the workpiece W to melt the workpiece W by using the first laser beam L1 having a larger focused beam diameter, as compared with a welding apparatus in the related art.

Further, the laser apparatus 1 performs scanning-irradiation using the first laser beam L1 and the second laser beam L2 at a high speed instead of the fixed-point irradiation, and thus a flow in the molten pool is generated. Bubbles generated from the molten pool reaching a high temperature are discharged to an outside. Thus, the porosity can be prevented. Further, it is possible to prevent local concentration of heat in the molten pool, stabilize the molten pool, and reduce the spatters. Since the porosity and the spatters cause welding defects such as poor bonding, occurrence of the welding defects can be prevented according to the laser apparatus 1 and the welding method using the apparatus.

Further, since the laser apparatus 1 stops the laser output between the irradiation in the first step and the irradiation in the second step, occurrence of laser escape from the gap occurring when the rectangular wires 52 are butted can be prevented, and carbonization, an insulation failure, and the like of the coating portion occurring along with the laser escape can be prevented.

Although the laser apparatus 1 has been described as an embodiment of the present disclosure, it is needless to say that the present disclosure is not limited to the laser apparatus 1 and the welding method using the laser apparatus 1 described above, and the embodiment described above can also be modified as follows.

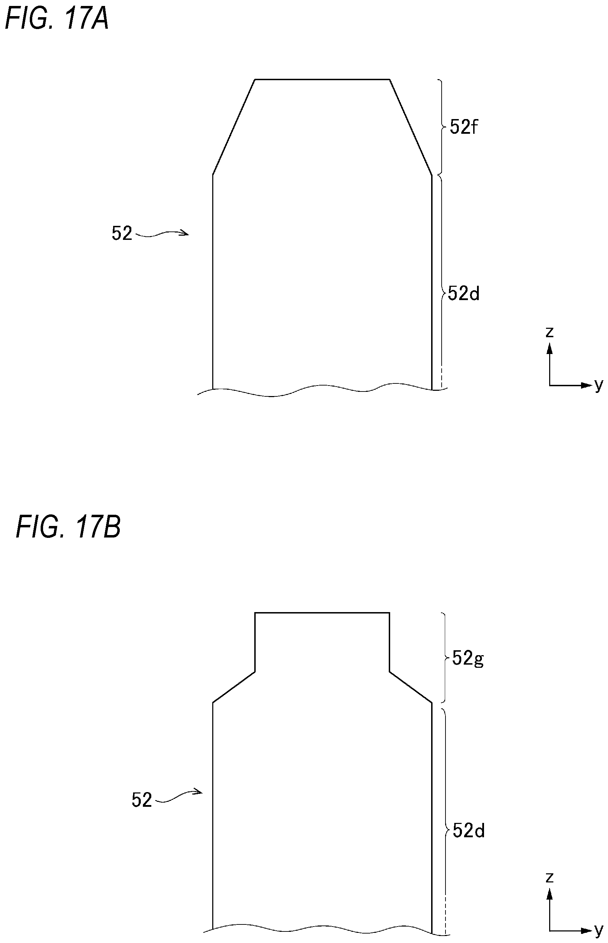

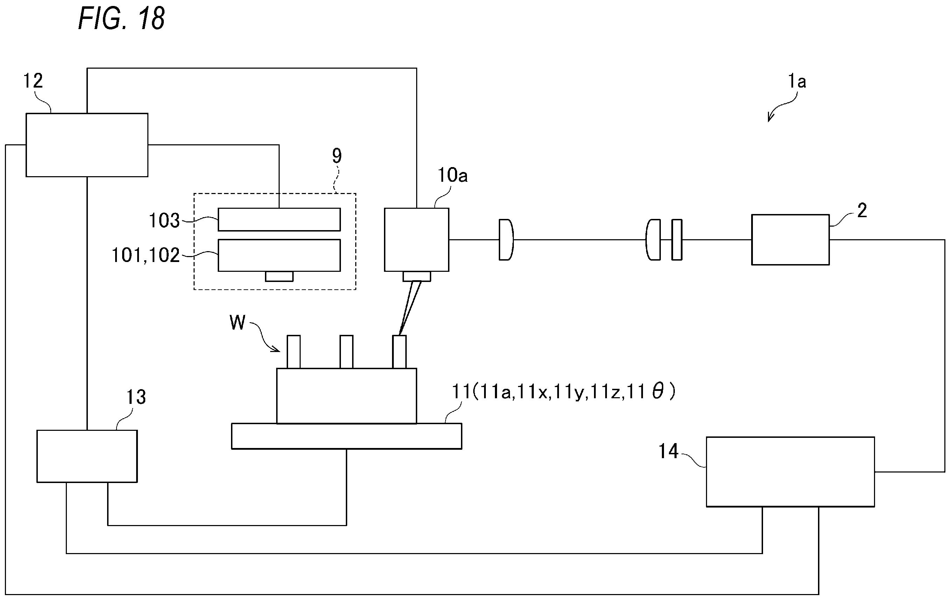

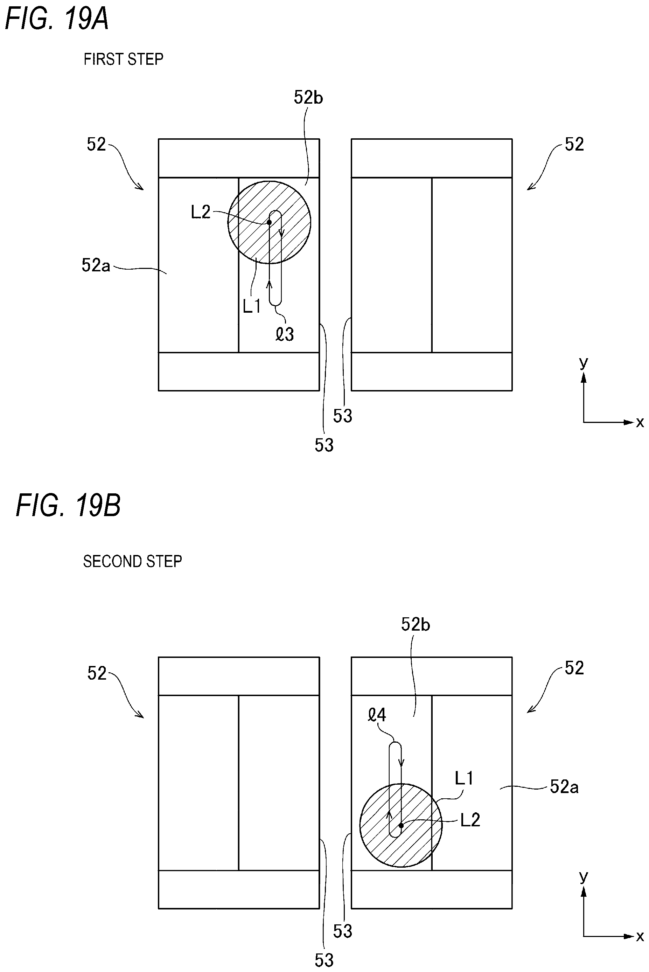

Here, modifications of the embodiment described above will be described. The embodiment described above and the modifications to be described below can be combined in any manner.
(1) In the embodiment described above, a specific example of the shape of the rectangular wire 52 has been described with reference to FIGs. 11A and 11B. However, this is merely an example, and the shape of the rectangular wire 52 that is a welding target of the laser apparatus 1 is not limited to the shape in FIGs. 11A and 11B. Although the angles of the inclined surface 52a and the inclined surface 52b are bilaterally symmetrical in FIG. 11A, the angles of the inclined surfaces may be asymmetric. Further, a form of the neck portion is not limited to the form of the neck portion 52e shown in FIG. 11B, and may be, for example, a form such as a neck portion 52f shown in FIG. 17A or a neck portion 52g shown in FIG. 17B. The rectangular wire 52 at least has a projection shape on the tip end side thereof, and may have any shape as long as being able to be prevented from being caught at the time of the insertion to the slot.
(2) In the embodiment described above, the welding of the rectangular wires 52 is performed by superimposing two laser beams (the first laser beam L1 and the second laser beam L2) having different wavelengths. However, this is merely an example, and the welding of the rectangular wires 52 may be performed with a single laser beam by using a high-power blue laser or a green laser. An apparatus configuration at this time is shown in FIG. 18. A laser apparatus 1a of FIG. 18 is different from the laser apparatus 1 of FIG. 4 in that the second oscillator 3 that is an IR laser and that a normal galvano scanner 10a is used instead of the hybrid galvano scanner 10. Although a 3D galvano scanner having a focus shifter function in the z direction is described as an example of the galvano scanner 10a, the configuration is not limited thereto, and a configuration may be adopted in which a 2D galvano scanner having no focus shifter function and performing only scanning in xy directions and an fθ lens are combined.
(3) Although it has been described in the embodiment described above that the linear reciprocating irradiation is repeated 1.5 times regarding each of the trajectories (irradiation trajectories) l1 and l2, the irradiation trajectories l1 and l2 are not limited to 1.5 times, and may be 2 times, or may be 2.5 times. It is preferable to determine an appropriate irradiation time in consideration of a balance between the melting amount of the rectangular wire 52 and a time loss caused by the jumping step.
   Further, the trajectory of the laser irradiation in each of the first step and the second step is not limited to the linear reciprocating irradiation. In each of the first step and the second step, the inclined surface 52b of each rectangular wire 52 may be subjected to circular turning irradiation, or may be subjected to elliptical turning irradiation as shown in trajectories (irradiation trajectories) l3 and l4 of FIGs. 19A and 19B. It is preferable to use processing figure data suitable for the size and shape of the rectangular wire 52. It is not suitable for the welding processing of the present embodiment to perform the turning irradiation across the two rectangular wires 52. Since there is a gap between the two rectangular wires 52, it is necessary to stop the laser output while crossing the gap. As a result, on/off control of the laser output frequently occurs, and the on/off control adversely affects the tact time.
(4) In the embodiment described above, the height of each pin is measured by the image processing unit 9 and the midpoint of the heights is set as the focus position. The image processing unit 9 may set a predetermined reference position as the focus position without measuring the height of each pin. An approximate variation in height is predicted, and a position at which the variation can be absorbed is defined as the reference position. Then, by setting the reference position as the focus position in the welding processing of all the pairs, it is not necessary to perform control for changing the focus position for each pair.
   In this way, when the reference position is set as the focus position in the welding processing of all the pairs, a height measurement function based on the image processing can be omitted, and a cost related to an image processing system can be reduced. Further, the number of control parameters for processing conditions in manufacturing of the motor can be reduced.
(5) Further, in a case where the image processing unit 9 measures the height of each pin as in the embodiment described above, it is preferable that a total irradiation time for a higher rectangular wire is longer than that for a lower rectangular wire, and the higher rectangular wire is melted more. Thus, a clean molten ball which is uniform on left and right sides can be formed in a short time.
(6) When a rapid temperature rise occurs on the workpiece W during welding, the spatters may be generated. Therefore, instead of being irradiated with the first laser beam L1 and the second laser beam L2 simultaneously, the workpiece W is first irradiated with only the first laser beam L1 having a high absorptance, and is additionally irradiated with the second laser beam L2 after a predetermined time elapses. Accordingly, the rapid temperature rise on the welding surface can be prevented, and the generation of spatters can be prevented. Further, since the welding surface whose temperature is increased by the first laser beam L1 is high in absorptance of the wavelength of the second laser beam L2, energy of the second laser beam L2 can be efficiently absorbed by the workpiece W, leading to shortening in processing time. In this case, it is desirable to perform the irradiation using the second laser beam L2 with a delay of 1 msec or more after the irradiation using the first laser beam L1.
(7) The focused beam diameter of the first laser beam L1 is not limited to 1050 µm. The focused beam diameter of the first laser beam L1 can be appropriately selected according to a cross-sectional area of the rectangular wire 52. For example, the focused beam diameter of the first laser beam L1 may be 1% to 30% of the cross-sectional area.
   Further, the focused beam diameter of the second laser beam L2 is not limited to 40 µm. The focused beam diameter of the second laser beam L2 can be about 10 µm to 100 µm, and is preferably equal to or less than one-tenth of the focused beam diameter of the first laser beam L1.
   The focused beam diameter of each laser beam depends on a core diameter of a transmission fiber, a focal length of a collimating lens, and a focal length of the condensing lens, and can be calculated by [the focused beam diameter] = [the core diameter of the transmission fiber] × ([the focal length of the condensing lens] / [the focal length of the collimating lens]). Therefore, the focused beam diameter of each laser beam can be changed by adjusting the optical system.
(8) In the embodiment described above, the scanning speed of the first laser beam L1 and the second laser beam L2 is described to be 500 mm/s, but the scanning speed of the first laser beam L1 and the second laser beam L2 is not limited thereto, and may be in a range of 100 mm/s to 1000 mm/s.
(9) In the embodiment described above, the irradiation in the first step and the irradiation in the second step are repeated until a molten ball of a desired size is formed. However, this is merely an example, and when it is not particularly necessary to form a molten ball, the irradiation in the first step and the irradiation in the second step may be repeated until a part of the fusion zone formed in one of the rectangular wires 52 and a part of the fusion zone formed in the other rectangular wire 52 enter the gap. Further, the irradiation in the first step and the irradiation in the second step may be repeated until the first fusion zone and the second fusion zone are bonded.
(10) In the embodiments described above, it has been described that the first laser beam L1 is of multi-mode and the second laser beam L2 is of single-mode, but this is merely an example, and the beam mode of each laser beam is not limited.
(11) In the embodiment described above, the side-nozzle-type shielding gas nozzles 19a and 19b are used to effectively supply nitrogen in order to avoid interference with the operations of the image processing unit 9 and the hybrid galvano scanner 10, but it is needless to say that the shielding gas nozzle is not limited to that of the side-nozzle-type. The shielding gas nozzle may be any type as long as being capable of spraying nitrogen to the welding surface at an inclination angle of 0° to 90° to allow welding in a nitrogen atmosphere.
(12) In the embodiment described above, the first laser beam L1 and the second laser beam L2 are circular beams, but the beam shapes of the first laser beam L1 and the second laser beam L2 are not limited thereto. For example, an elliptical beam or a rectangular beam may be used. In this case, it is preferable that a longitudinal direction in the rectangular cross section of the rectangular wire is a major axis.
(13) In the embodiment described above, a speed at which the laser irradiation position is moved in step S110 and step S113 may be faster than the laser irradiation speed in each of the first step and the second step. For example, the speed may be 1000 mm/s which is twice the laser irradiation speed in each of the first step and the second step. Accordingly, the tact time can be shortened.
(14) In the laser apparatus 1 described above, regarding information such as the focused beam diameter, the output power of each of the first laser L1 and the second laser L2, or the irradiation trajectory (processing figure data) in each of the first step and the second step, the irradiation time, the irradiation speed, and the number of times of irradiation, appropriate values corresponding to the size of the rectangular wire may be input in advance via the input unit 203 of the control PC 12. Further, when the size of the workpiece, the finished shape of the molten ball, and the like are input, the control unit 201 may be configured to determine the focused beam diameter, the output power, the irradiation trajectory, the irradiation time, the irradiation speed, the number of times of irradiation, and the like of the laser according to a predetermined algorithm.

## Claims

1. A welding method of welding tip ends of a first member and a second member with a laser apparatus, the tip ends having a projection shape, the welding method comprising:
arranging the tip ends of the first member and the second member next to each other while facing a butting surface of the first member and a butting surface of the second member and while facing the tip ends towards the laser apparatus;
a first step of irradiating a position on the tip end of the first member which is close to the butting surface of the first member with the laser beam to form a first fusion zone; and
a second step of irradiating a position on the tip end of the second member which is close to the butting surface of the second member with the laser beam to form a second fusion zone.

2. The welding method according to claim 1,
wherein the first member and the second member are rectangular wires serving as a coil for a stator,
wherein the projection shape on the tip end side is a gable roof shape having a first inclined surface formed at a tip end portion of each of the rectangular wires and a second inclined surface formed non-parallel to the first inclined surface, and
wherein, in each of the first step and the second step, one of the first inclined surface and the second inclined surface located close to the butting surface is irradiated with the laser beam.

3. The welding method according to claim 2,
wherein, in the first step, substantially linear reciprocating irradiation is performed on the inclined surface of the first member located close to the butting surface to form the first fusion zone, and
wherein, in the second step, substantially linear reciprocating irradiation is performed on the inclined surface of the second member located close to the butting surface to form the second fusion zone.

4. The welding method according to claim 3,
wherein the laser irradiation in the first step and the laser irradiation in the second step are alternately repeated.

5. The welding method according to claim 4,
wherein the laser irradiation in the first step and the laser irradiation in the second step are alternately repeated until the first fusion zone and the second fusion zone are bonded.

6. The welding method according to claim 4,
wherein the laser irradiation in the first step and the laser irradiation in the second step are alternately repeated until the first fusion zone and the second fusion zone are bonded to form a molten ball of a predetermined size.

7. The welding method according to claim 4,
wherein the first member and the second member are arranged next with each other to face the butting surface of the first member and the butting surface of the second member to have a gap therebetween, and
wherein the laser irradiation in the first step and the laser irradiation in the second step are alternately repeated until the first fusion zone and the second fusion zone enter the gap.

8. The welding method according to any one of claims 4 to 7, further comprising:
a jumping step of moving, after performing the laser irradiation on one of the rectangular wires, a laser irradiation position to the other of the rectangular wires in a state where the laser irradiation is stopped, while alternately repeating the laser irradiation in the first step and the laser irradiation in the second step.

9. The welding method according to claim 8,
wherein, in the first step, the substantially linear irradiation using the laser beam is reciprocated 1.5 times on the inclined surface of the first member, and
wherein, in the second step, the substantially linear irradiation using the laser beam is reciprocated 1.5 times on the inclined surface of the second member.

10. The welding method according to claim 1, further comprising:
an imaging step of capturing an image of the first member and the second member as welding targets; and
a control step of analyzing the image captured in the imaging step, acquiring position information of the first member and the second member, and determining an irradiation position of the laser beam based on the acquired position information.

11. The welding method according to claim 1, further comprising:
an imaging step of capturing an image of the first member and the second member as welding targets; and
a control step of analyzing the image captured in the imaging step, acquiring height information of the first member and the second member, and determining a midpoint of heights of the first member and the second member as a focus position based on the acquired height information.

12. The welding method according to claim 1,
wherein the laser beam includes a first laser beam and a second laser beam having different wavelengths, wherein in particular the wavelength of the first laser beam is 300 nm to 600 nm and/or the wavelength of the second laser beam is 780 nm to 1100 nm

13. A laser apparatus for butting a first member and a second member each of which has a projection shape on a tip end side thereof, and welding tip ends of the respective first member and second member, the laser apparatus comprising:
an oscillator configured to oscillate a laser beam;
a galvano scanner unit configured to perform irradiation using the laser beam while displacing the laser beam to any direction; and
a control unit configured to control the oscillator and the galvano scanner unit,
wherein the control unit controls the oscillator and the galvano scanner unit such that a position on the tip end of the first member which is close to a butting surface is irradiated with the laser beam to form a first fusion zone, and a position on the tip end of the second member which is close to the butting surface is irradiated with the laser beam to form a second fusion zone.

14. The laser apparatus according to claim 15, further comprising:
an image processing unit configured to capture an image of the first member and the second member to detect position information,
wherein the control unit determines an irradiation position of the laser beam using the position information detected by the image processing unit.
